(19) Europäisches Patentamt
European Patent Office
Office européen des brevets

(11) Veröffentlichungsnummer: **0 019 803**
**B1**

(12) # EUROPÄISCHE PATENTSCHRIFT

(45) Veröffentlichungstag der Patentschrift: **15.12.82**

(51) Int. Cl.[3]: **C 08 G 18/12**, C 08 G 18/70, C 08 G 18/79, C 08 J 5/04

(21) Anmeldenummer: **80102681.6**

(22) Anmeldetag: **14.05.80**

(54) **Hitzehärtbare Formmassen und Verfahren zur Herstellung von Formkörpern.**

(30) Priorität: **25.05.79 DE 2921162**

(43) Veröffentlichungstag der Anmeldung: **10.12.80 (Patentblatt 80/25)**

(45) Bekanntmachung des Hinweises auf die Patenterteilung: **15.12.82 Patentblatt 82/50**

(84) Benannte Vertragsstaaten: **AT BE CH DE FR GB IT LI NL SE**

(56) Entgegenhaltungen:
**EP A 0 009 698**
**DE A 1 595 604**
**DE A 2 164 381**
**DE C 1 143 634**
**GB A 1 133 314**
**US A 3 099 642**
**US A 3 248 370**

(73) Patentinhaber: **BAYER AG**
**Zentralbereich Patente, Marken und Lizenzen**
**D-5090 Leverkusen 1, Bayerwerk (DE)**

(72) Erfinder: **Recker, Klaus, Dr.**
**Wolfskaul 6**
**D-5000 Koeln 80 (DE)**
Erfinder: **Reinecke, Gerd**
**Eschenweg 5**
**D-5060 Bergisch Gladbach 2 (DE)**
Erfinder: **Kraft, Karl Josef, Dr.**
**Heymannstrasse 38**
**D-5090 Leverkusen (DE)**

**EP 0 019 803 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Hitzehärtbare Formmassen und Verfahren zur Herstellung von Formkörpern

Die Erfindung betrifft lagerstabile, lösungsmittelfreie und hitzehärtbare Formmassen auf Polyurethanbasis, die ein faserförmiges Verstärkungsmaterial enthalten, sowie die Herstellung von faserverstärkten Formkörpern unter Verwendung der Formmassen.

Faserverstärkte Formkörper können nach Verfahren des Standes der Technik mit einer Vielzahl unterschiedlicher synthetischer Polymerer hergestellt werden, wobei sich als besonders vorteilhaftes Verstärkungsmaterial Glasfasern erwiesen haben. Es ist z.B. bekannt, aus ungesättigte Polyester enthaltenden Harzen (im folgenden «UP-Harze» genannt) und Glasfasern lagerstabile Halbzeuge (Harzmatten, « Prepregs » ; Preßmassen) herzustellen, die mit Hilfe beheizter Pressen verformt und zu Formkörpern sehr hoher Festigkeit und Steifigkeit ausgehärtet werden können. Dieses Verfahren hat jedoch mehrere Nachteile : So führen die üblicherweise als Lösungsmittel für die UP-Harze verwendeten vinylgruppenhaltigen Monomeren (z.B. Styrol) bei der radikalisch initiierten Polymerisation zu einer sehr hohen Vernetzungsdichte, die eine hohe Sprödigkeit und Kerbschlagempfindlichkeit des Formkörpers bewirkt. Überdies erschwert die Anwesenheit von Lösungsmitteln die Verarbeitung, da umfangreiche Maßnahmen zur Absaugung der Lösungsmitteldämpfe getroffen werden müssen und explosionsgeschützte Verarbeitungsanlagen erforderlich sind.

Auch die Verstärkung von Polyurethan-Elastomeren mit Hilfe von Fasermaterialien ist bekannt. So können z.B. nach dem Spritzgieß- oder Reaktionsspritzgießverfahren glasfaserverstärkte Polyurethanformkörper hergestellt werden. Die mechanischen Eigenschaften, insbesondere die Biegesteifigkeit solcher Formkörper lassen sich jedoch nur in begrenztem Maße steigern, da aus verfahrenstechnischen Gründen die Länge des Fasermaterials ca. 1 bis 6 mm nicht übersteigen darf. Als besonders nachteilig muß angesehen werden, daß aufgrund der begrenzten Faserlänge der thermische Ausdehnungskoeffizient der verstärkten Polyurethan-Elastomeren immer noch ein Vielfaches des Ausdehnungskoeffizienten von Stahl beträgt.

In der DE-PS 968 566 wird ein Verfahren zur Herstellung hochmolekularer, vernetzter Kunststoffe beschrieben, bei welchem zunächst aus einem Hydroxylgruppen aufweisenden Polyester, einem Glykol und einem Unterschuß an Diisocyanat ein Zwischenprodukt hergestellt wird, das dann durch Umsetzung mit einem Überschuß eines Uretdiongruppen-haltigen Diisocyanats zu lagerstabilen Halbzeugen führt. Diese Halbzeuge können schließlich plastisch verformt und durch Temperatureinwirkung zu elastischen Formkörpern ausgehärtet werden.

Die in dieser Patentschrift beschriebenen Polyurethan-Elastomere sind überwiegend linear aufgebaut und besitzen zwar hohe Elastizität und Zähigkeit, reichen aber in ihrer Härte und Steifigkeit für viele Anwendungen nicht aus. Die Verwendung von faserförmigem Verstärkungsmaterial wird in DE-PS 968 566 nicht erwähnt. Zwar ließen sich Glasfasern mit einer Länge > 6 mm prinzipiell in das oben erwähnte Zwischenprodukt einarbeiten ; die hohe Viskosität des Zwischenproduktes würde aber zum Einmischen des Fasermaterials und des für die Vernetzung notwendigen Uretdiondiisocyanats Walzwerke oder Kneter erfordern, wie sie bei der Kautschukverarbeitung üblich sind. Bei einem solchen Einarbeiten des Fasermaterials würden jedoch verfahrensbedingt so hohe Scherkräfte auftreten, daß die Einzelfasern auf Bruchteile ihrer Ausgangslänge zermahlen werden, so daß die gewünschten Effekte der Versteifung einerseits und der Senkung des thermischen Ausdehnungskoeffizienten andererseits nicht mehr in vollem Umfang eintreten könnten.

In US-PS 3 248 370 wird bei Temperaturen unterhalb 100 °C ein lagerstabiles, thermoplastisches Polyurethan aus höhermolekularen Polyolen, gegebenenfalls Wasser oder Glycolen und einer Diisocyanatmischung aus wenigstens 5 Gew.-% eines Uretdiondiisocyanats und wenigstens 50 Gew.-% eines monomeren Diisocyanats hergestellt. Dem thermoplastischen Produkt können Füllstoffe wie Ruß oder Silikagel eingearbeitet werden. Die Einarbeitung von Fasermaterialien wird nicht erwähnt, würde bei der Einarbeitung auf Knetern, Kalandern oder Extrudern jedoch auch zur Problematik wie bei der DE-PS 968 566 beschrieben, führen.

Lagerfähige, thermisch vernetzende Polyurethankompositionen werden in der GB-PS 1 133 314 beschrieben, wobei man 1 Mol eines höhermolekularen Polyols mit wenigstens 1,5 Mol eines festen Uretdion-diisocyanats (Schmelzpunkt oberhalb 100 °C) mit wenigstens 0,3 Mol eines festen Kettenverlängerers (z.B. Hydrochinon-dihydroxyethylether, Schmelzpunkt 106 °C) vermischt, wobei sowohl das feste Uretdiondiisocyanat wie auch der feste Kettenverlängerer zu wenigstens 80 Gew.-% eine Korngröße unter 30 μm aufweisen muß. Durch Erhitzen kann eine Vernetzung hervorgerufen werden.

Reversibel warmverformbare, faserverstärkte, harte Polyurethankunststoffe werden nach der DE-A 2-164 381 erhalten, wenn man ein bei Temperaturen bis 50° flüssiges noch nicht ausreagiertes Polyurethan-Reaktionsgemisch, welches zu reversibel warmverformbaren, harten Polyurethanen führt, mit 1-50 Gew.-% anorganischen oder organischen Fasern, vorzugsweise 5-30 Gew.-% an geschnittenen oder gemahlenen organischen oder anorganischen Fasern, vermischt. Die Reaktionsmischung ist jedoch nicht lagerstabil und härtet innerhalb kurzer Zeit nach Vermischung aus.

Der Erfindung liegt die Aufgabe zugrunde, neue lösungsmittelfreie, lagerstabile Formmassen zur Verfügung zu stellen, die durch Verpressen bei erhöhter Temperatur zu Formkörpern hoher Steifigkeit, guter Schlagzähigkeit und hoher Dimensionsstabilität ausgehärtet werden können.

Diese Aufgabe wird mit den erfindungsgemäß zur Verfügung gestellten Formmassen gelöst.

Gegenstand der vorliegenden Erfindung sind im wesentlichen lösungsmittelfreie Formmassen, bestehend aus

A. 91-25 Gew.-%, bevorzugt 78- 40 Gew.-%, einer Polyhydroxylverbindung,

B. 4-15 Gew.-%, bevorzugt 7-10 Gew.-%, eines Polyisocyanats mit einem Schmelzpunkt oberhalb von 100 °C, bevorzugt oberhalb von 125 °C,

und

C. 5-60 Gew.-%, bevorzugt 15-50 Gew.-%, eines organischen oder anorganischen Füllstoffes, und gegebenenfalls üblichen Zusatzstoffen, wobei das NCO/OH-Äquivalentverhältnis (unter Berücksichtigung eventuell verkappter NCO-Gruppen) der Komponenten A) und B) zwischen 1 : 1 und 1 : 1,75 liegt, welche dadurch gekennzeichnet sind, daß

1) Komponente A ein Hydroxylgruppen aufweisendes Urethan-Präpolymeres mit einer Viskosität von mindestens 20 Pa.s/25 °C,

0,5-7 Gew.-%, bevorzugt 1,5-4 Gew.-%, bezogen auf Präpolymer, an freien Hydroxylgruppen,

5-20 Gew.-%, bevorzugt 10-15 Gew.-%, an Urethangruppen —NH—CO—O und

0-2,5 Gew.-% an Harnstoffgruppen —NH—CO—NH— ist, das gegebenenfalls als Zusatz 1-5 Gew.-%, bezogen auf Präpolymer, eines Molekularsiebs vom Natriumalumosilikattyp und

0,1-5 Gew.-%, bezogen auf Präpolymer, eines oder mehrerer Aktivatoren, enthält, und daß

2) der als Komponente C) verwendete Füllstoff ein Fasermaterial mit einer mittleren Faserlänge von 10-100 mm, bevorzugt 20-60 mm, ist.

Gegenstand der Erfindung ist ferner ein Verfahren zur Herstellung von faserverstärkten Formkörpern auf Polyurethanbasis durch stufenweise Umsetzung von Polyisocyanaten, höhermolekularen Polyhydroxylverbindungen und Kettenverlängerungsmitteln in Gegenwart eines faserförmigen Verstärkungsmaterials, welches dadurch gekennzeichnet ist, daß man in einer ersten Stufe bei einer Temperatur von 10 bis 50 °C, vorzugsweise bei 20 bis 30 °C,

a) ein Polyisocyanat mit

b) 80 bis 97 Gew.-%, bevorzugt 85 bis 91 Gew.-%, bezogen auf die Summe der Komponenten b) - d) einer oder mehrerer, 2 bis 8, vorzugsweise 2 bis 4, besonders bevorzugt 2 oder 3 Hydroxylgruppen aufweisender Verbindungen mit einem Molekulargewicht von 300 bis 10 000, vorzugsweise 350 bis 8 000, wobei Komponente b) vorzugsweise ein Gemisch darstellt aus

ba) 45 bis 90 Gew.-%, bevorzugt 50 bis 80 Gew.-%, bezogen auf die Summe der Komponenten b)-d), eines Polyols mit einem Molekulargewicht von 1 000 bis 10 000, bevorzugt 2 000 bis 8 000, und

bb) 1 bis 45 Gew.-%, bevorzugt 5 bis 35 Gew.-%, eines Polyols mit einem Molekulargewicht von 300-950, bevorzugt 350-800,

c) 3 bis 15 Gew.-%, bevorzugt 6 bis 12 Gew.-%, eines 2 bis 4, vorzugsweise 2 oder 3, Hydroxylgruppen aufweisenden Kettenverlängerers mit einem Molekulargewicht von 62 bis 250, bevorzugt 76 bis 150, sowie gegebenenfalls

d) 0 bis 5 Gew.-% einer Verbindung mit 2 bis 4, vorzugsweise 2 Aminogruppen und einem Molekulargewicht vorzugsweise unter 200, bzw. einer dazu äquivalenten Menge Wasser,

gegebenenfalls stufenweise, zu einem 0,5 bis 7, bevorzugt 1,5 bis 4 Gew.-%, Hydroxylgruppen, 5 bis 20, bevorzugt 10 bis 15 Gew.-%, Urethangruppen und 0 bis 2,5 Gew.-% Harnstoffgruppen aufweisenden Präpolymeren A) umsetzt, wobei die Komponenten a)-d) bei der gewählten Reaktionstemperatur flüssig sind und eine mittlere Funktionalität an NCO-reaktiven Gruppen von 2,0 bis 2,6 aufweisen und das Äquivalentverhältnis zwischen NCO-Gruppen der Komponente a) zu gegenüber NCO-Gruppen reaktiven Wasserstoffatomen der Komponenten b)-d) zwischen 0,40 : 1 und 0,85 : 1, bevorzugt zwischen 0,45 : 1 und 0,80 : 1, besonders bevorzugt zwischen 0,5 : 1 und 0,65 : 1 liegt, mit der Maßgabe, daß die mittlere Funktionalität der Komponenten b) und d) mindestens 2,1 ist, falls das Äquivalentverhältnis unterhalb von 0,5 : 1 liegt und maximal 2,4 ist, falls das Äquivalentverhältnis oberhalb von 0,65 : liegt, dem Vorpolymeren A) während und/oder nach dessen Herstellung das Polyisocyanat B) mit einem Schmelzpunkt oberhalb von 100 °C, bevorzugt oberhalb von 125 °C, und das Fasermaterial C) mit einer mittleren Fäserlänge von 10 bis 100 mm, bevorzugt 20 bis 60 mm, sowie gegebenenfalls das Molekularsieb vom Natriumalumosilikattyp und einen oder mehreren Aktivatoren zusetzt und

in einem zweiten Schritt die so erhaltene lagerstabile

Formmasse bei einer Temperatur oberhalb von 90 °C, vorzugsweise zwischen 110 und 150 °C, und einem Druck zwischen 20 und 400 bar, vorzugsweise 20 und 150 bar, unter Formgebung aushärtet.

Bei der Herstellung des OH-Präpolymeren A) kommen als Isocyanatkomponente a) im Prinzip alle an sich bekannten, bei der Reaktionstemperatur, vorzugsweise bei Raumtemperatur, flüssigen Polyisocyanate in Frage.

Es sind dies aliphatische, cycloaliphatische, araliphatische, aromatische und heterocyclische Polyisocyanate, wie sie z.B. von W. Siefken in Justus Liebigs Annalen der Chemie, 562, Seiten 75 bis 136 beschrieben werden, beispielsweise solche der Formel

$$Q\,(NCO)_n$$

in der

2 bis 4, vorzugsweise 2,

und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 2,4- und 2,6-Toluylendiisocyanat sowie beliebige Gemische dieser Isomeren, Diphenylmethan-2,4'- und/oder -4,4'-diisocyanat.

Ferner kommen beispielsweise erfindungsgemäß in Frage : Polyphenyl-polymethylen-polyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonylisocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 357 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt sind in der Regel die technisch leicht zugänglichen Polyisocyanate, z.B. das 2,4- und 2,6-Toluylendiisocyanat sowie beliebige Gemische dieser Isomeren (« TDI »), Polyphenyl-polymethylen-polyisocyanate, wie sie durch Anilin-Formaldehyd-Kondensation und anschließende phosgenierung hergestellt werden (« rohes MDI ») und Carbodiimidgruppen, Urethangruppen, Allophanatgruppen, Isocyanuratgruppen, Harnstoffgruppen oder Biuretgruppen aufweisenden polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Besonders bevorzugt sind die bei Raumtemperatur flüssigen Polyphenyl-polymethylen-polyisocyanate.

Als Komponente b) werden beim Aufbau des OH-präpolymeren bei der Reaktionstemperatur, vorzugsweise unterhalb von 30 °C, flüssige Verbindungen mit 2 bis 8 Hydroxylgruppen und einem Molekulargewicht zwischen 300 und 10 000, vorzugsweise ein Gemisch aus Polyolen mit einem Molekulargewicht zwischen 1 000 und 10 000, bzw. zwischen 300 und 950, eingesetzt. Bevorzugte Komponente ba) sind Polyole vom Molekulargewicht 2 000 bis 8 000, insbesondere 3 000 bis 6 000, bevorzugte Komponente bb) Polyole vom Molekulargewicht 350 bis 800, insbesondere 400 bis 600, z.B. 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind :

Die in Frage kommenden hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid,

Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Geganwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimenthylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751 ; DE-Offenlegungsschrift 2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Die genannten Polyhydroxylverbindungen können vor ihrer Verwendung im Polyisocyanat-Polyadditionsverfahren noch in der verschiedensten Weise modifiziert werden : So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift

3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695 ; DE-Auslegeschrift 1 152 536) oder Polycarbonatpolyolen (DE-Patentschrift 1 769 795 ; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 300-10 000, z.B. Mischungen von Polyäthern und Polyestern, eingesetzt werden.

Für die Herstellung des OH-Präpolymers A) geeignete niedermolekulare Kettenverlängerungsmittel c) sind beispielsweise :

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Athanolamin, Diäyhanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Als weitere erfindungsgemäß geeignete niedermolekulare Polyole vom Molekulargewicht bis 250 Esterdiole der allgemeinen Formeln

$$HO—(CH_2)_x—CO—O—(CH_2)_y—OH$$

und

$$HO—(CH_2)_x—O—CO—R—CO—O—(CH_2)_x—OH$$

in denen

R einen Alkylenrest mit 1-10, vorzugsweise 2-6, C-Atomen bzw. einen Cycloalkylen- oder Arylenrest mit 6-10 C-Atomen

$x = 2\text{-}6$

und

$y = 3\text{-}5$

bedeuten, z.B. δ-Hydroxybutyl-ε-hydroxy-capronsäureester, ω-Hydroxyhexyl-γ-hydroxybuttersäureester, Adipinsäure-bis-(β-hydroxyäthyl)ester und Terephthalsäure-bis(β-hydroxyäthyl)ester ;

Diolurethane der allgemeinen Formel

$$HO-(CH_2)_x-O-CO-NH-R'-NH-CO-O-(CH_2)_x-OH$$

in der

R' einen Alkylenrest mit 2-15, vorzugsweise 2-6, C-Atomen oder einen Cycloalkylen- oder Arylenrest mit 6-15 C-Atomen und

x eine Zahlt zwischen 2 und 6

darstellen, sowie Diolharnstoffe der allgemeinen Formel

$$HO-(CH_2)_x-\underset{R'''}{\underset{|}{N}}-CO-NH-R''-NH-CO-\underset{R'''}{\underset{|}{N}}-(CH_2)_x-OH$$

in der

R'' einen Alkylenrest mit 2-15, vorzugsweise 2-9, C-Atomen oder einen Cycloalkylen- oder Arylenrest mit 6-15 C-Atomen,

R''' Wasserstoff oder eine Methylgruppe und

x die Zahlen 2 oder 3

bedeuten.

Für manche Zwecke ist es vorteilhaft, Polyole einzusetzen, welche Sulfonat- und/oder phosphonatgruppen enthalten (DE-Offenlegungsschrift 2 719 372), vorzugsweise das Addukt von Bisulfit an Butendiol-1,4 bzw. dessen Alkoxylierungsprodukte.

Die als Komponente d) bei der Herstellung des OH-Präpolymers gegebenenfalls mitzuverwendenden Verbindungen mit mindestens zwei Aminogruppen sind z.B. aliphatische und/oder aromatische Diamine.

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure ; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. β-aminoäthyl-semicarbazido-carbonat (DE-Offenlegungsschrift 1 902 931). Zur Steuerung ihrer Reaktivität können die Aminogruppen ganz oder teilweise durch Aldimin bzw. Ketimin-Gruppen blockiert sein (US-Patentschrift 3 734 894 ; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-offenlegungsschrift 2 638 760), Diaminobenzolphosphonsäureester (DE-Offenlegungsschrift 2 459 491), Sulfonat-oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Natriumalumosilikate können erfindungsgemäß z.B. die als Molekularsiebe im Handel befindlichen Zeolithe eingesetzt werden.

Erfindungsgemäß geeignete Aktivatoren sind Polyurethankatalysatoren der an sich bekannten Art, z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-Offenlegungsschriften 2 624 527 und 2 624 528), 1,4-Diazabicyclo-(2,2,2)-octan, N-Methyl-N'-dimethylaminoethyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)alkyläther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd,

oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B.

Triäthanolamin, Triisopropanolamin, N-Methyl-diäthanolamin, N-Äthyl-diäthanolamin, N,N-Dimethyläthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre Katalytische Wirkung werden in den DE-Offenlegungsschriften 2 062 286, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367 ; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Auch Reaktionsverzögerer können gegebenenfalls mitverwendet werden, z.B. sauer reagierende Stoffe wie Salzsäure oder organische Säurehalogenide, ferner Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden Zusatzstoffen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Als Komponente B) der erfindungsgemäßen Formmassen kommen alle an sich bekannten Polyisocyanate (vorzugsweise Diisocyanate) mit einem Schmelzpunkt oberhalb von 100 °C, vorzugsweise zwischen 125 und 200 °C, in Frage. Beispiele hierfür sind u.a. 1,4-Dichlor-2,5-diisocyanatobenzol, 1-Chlor-4-methoxy-2,5-diisocyanato-benzol, 1,3-Dimethoxy-4,6-diisocyanatobenzol, 3,3'-Dimethoxy-4,4'-diisocyanatobiphenyl, 2,5,2',5'-Tetramethyl-4,4'-diisocyanatodiphenylmethan, Diphenylsulfon-4,4'-diisocyanat, Naphthylen-1,5-diisocyanat sowie das Harnstoffdiisocyanat aus 1 Mol Wasser und 2 Mol 2,4-Toluylendiisocyanat (s. DE-OS 2 902 469), wobei die drei letztgenannten Diisocyanate bevorzugt sind.

Bevorzugt sind erfindungsgemäß als feste, hochschmelzende Polyisocyanate auch eine Uretdiongruppe aufweisende Diisocyanate, wie sie durch an sich bekannte Dimerisierung der in der Polyurethanchemie bekannten Polyisocyanate entstehen. Besonders bevorzugt sind das dimere 2,4-Toluylendiisocyanat und die dimeren Diphenylmethandiisocyanate.

Das hochschmelzende Polyisocyanat wird vor seiner Verwendung vorzugsweise auf eine Teilchengröße $< 40$ µm zerkleinert.

Als Komponente C) kommen alle an sich bekannten anorganischen und/oder organischen faserförmigen Verstärkungsmaterialien in Betracht wie z.B. Glasfasern (vorzugsweise in Längen zwischen 20 und 60 mm), Graphitfasern und Asbestfasern zwischen 20 und 60 mm), Graphitfasern und Asbestfasern oder Fasermaterialien, die von einem organischen Polymeren stammen, wie z.B. von einem Polyester, Polyethylenterephthalat oder einem Polyamid, wie Polyhexamethylenadipamid oder Polycaprolactam. Diese Fasermaterialien können z.B. als Stoff, Matte, Band, Seil, durchgehende Fasern oder zerhackte Stapelfasern vorliegen. Bevorzugt sind erfindungsgemäß Glasfasern, die in an sich bekannter Weise mit Schlichten ausgerüstet sind, welche den Fasern eine Affinität zu Polyurethanen verleihen (s. z.B. DE-AS 2 426 657 und DE-AS 2 426 654).

Die einzubauende Fasermaterialmenge hängt von der gewünschten Verbesserung der mechanischen

Eigenschaften des Formkörpers ab. Im allgemeinen werden 5 bis 60 Gew.-% Fasermaterial, bezogen auf das Gesamtgewicht des faserverstärkten Körpers, angewendet.

Zusätzlich zu den Fasermaterialien können, wie schon erwähnt, auch andere Zusatzstoffe, z.B. teilchenförmige Füllstoffe wie Kreide, Ruß, Ton, Eisenoxid, Glimmer, kieselsäurehaltige Materialien, Titandioxid und Farbpigmente, Gleit- und Trennmittel wie Zn-Stearat, UV-Absorber etc., mitverwendet werden.

Durchführung des erfindungsgemäßen Verfahrens

Komponente B) wird vorzugsweise in Komponente a) supendiert, kann aber auch in dem Gemisch der Komponenten b) bis d) sowie gegebenenfalls Molekularsieb und Aktivator angepastet werden, bevor Komponente a) zugesetzt wird. (Vorzugsweise wird jedoch der Aktivator möglichst spät zugesetzt, damit die Reaktion nicht zu schnell verläuft.) Das Äquivalenzverhältnis von Komponente a) zu der Summe der Komponenten b)-d) und die mittlere Funktionalität der Komponenten b)-d) an gegenüber Isocyanaten reaktiven Gruppen sind voneinander abhängig :

Ein relativ hoher Verzweigungsgrad macht eine geringere Vorverlängerung des Polyolgemisches mit Isocyanat (gleichbedeutend mit niedrigem Äquivalenzverhältnis) erforderlich, um dem Präpolymeren A) und damit der Formmasse einen Viskositätswert zu verleihen, der für die Weiterverarbeitung günstig ist. Umgekehrt muß eine niedrige Verzweigung durch ein höheres Äquivalenzverhältnis kompensiert werden. Im allgemeinen muß bei einem Äquivalenzverhältnis $\leqq$ 0,5 : 1, die mittlere Funktionalität $\geqq$ 2,1 sein ; bei einem Aquivalenzverhältnis $\geqq$ 0,65 : 1 beträgt die mittlere Funktionalität $\leqq$ 2,4. Durch Vermischen der Suspension von Komponente B) in Komponente a) mit dem Gemisch der übrigen Komponenten bzw. durch Vermischen der Suspension von Komponente B) in dem Gemisch der Komponenten b)-d) sowie gegebenenfalls Molekularsieb und Aktivator mit Komponente a) wird die Polyadditionsreaktion zwischen den C-H-aciden Verbindungen und dem in flüssiger Phase vorliegenden Polyisocyanat a) gestartet.

Nun können die Fasermaterialien C) dank der relativ niedrigen Viskosität der Reaktionsmischung nach der für UP-Harze üblichen Technologie eingearbeitet werden. Die Reifezeit bis zum Erreichen des lagerfähigen, hitzeverpreßbaren Zwischenprodukts beträgt je nach Temperatur, Aktivatormenge und Auswahl der Rohstoffe einige Stunden bis acht Tage. Innerhalb dieser Zeit vollzieht sich die Bildung des Hydroxylgruppen aufweisenden Präpolymeren A) offenbar ohne wesentliche Beteiligung des hochschmelzenden Polyisocyanats B), wie sich durch Titration des Gesamt-NCO-Gehalts mit n-Dibutylamin nachweisen läßt.

Die erfindungsgemäßen Formmassen weisen nach Beendigung der Reifezeit — je nach Temperatur — eine für die Praxis ausreichende Lagerstabilität von mindestens 10 Tagen auf. Innerhalb dieser Zeit können die Formmassen durch Einwirkung von Temperaturen oberhalb 90 °C, vorzugsweise zwischen 110 und 150 °C, und Drücken zwischen ca. 20 und 400 bar verformt und innerhalb von ca. 1 bis 10 Minuten zu Formkörpern ausgehärtet werden, die bei einer vergleichsweise hohen Biegesteifigkeit eine gute Schlagzähigkeit und Weiterreißfestigkeit besitzen.

Die folgenden Beispiele erläutern die vorliegende Erfindung. Wenn nicht anders vermerkt, sind Mengenangaben als Gewichtsteile bzw. Gewichtsprozente zu verstehen.

Beispiel 1

Komponente I

84 Teile eines linearen Polypropylenglykols mit endständig primären OH-Gruppen (Molekulargewicht : 4 000)
13 Teile 1,2-Propylenglykol
3 Teile eines verzweigten Polypropylenglykols (Funktionalität = 3 ; Mol-Gew. : 450)
2 Teile Polypropylenglykoladipat (Mol-Gew. : 820)
5 Teile Na-Al-Silikat als 50 %ige Paste in einem teilweise verzweigten Polypropylenglykol (Mol-Gew. : 3 700 ; Funktionalität = 2,75).
0,5 Teile N,N-Dimethylbenzylamin
100 Teile Kalziumcarbonat (Kreide)
1 Teil Bleisalz der Phenyl-ethyl-dithiocarbaminsäure.

Die mittlere Funktionalität der gegenüber Isocyanaten reaktive Gruppen tragenden Verbindungen in Komponente I beträgt 2,04.

Komponente II

38 Teile eines technischen Diphenylmethandiisocyanat-Gemisches (NCO-Gehalt : 31 %), bestehend aus 70 % 4,4'-Diphenylmethandiisocyanat, 5 % 2,4'-Diphenylmethan-diisocyanat und 25 % an mehrkernigen Polyphenyl-polymethylenpolyisocyanaten
19 Teile dimeres 2,4-Toluylendiisocyanat

Komponente III

67 Teile Glasrovings aus einer handelsüblichen Faser mit einem Durchmesser von 11 bis 14 µm, die gemäß Beispiel 1 von DE-AS 2 426 657 beschichtet ist ; auf 52 mm Länge geschnitten.

a) Herstellung der erfindungsgemäßen Formpreßmasse

Zunächst werden die Komponenten I und II über geeignete Dosier- und Mischaggregate homogen miteinander im angegebenen Verhältnis vermischt. Die reaktive Masse wird auf einer Polyethylenfolie in 1 bis 2 mm Dicke ausgerakelt. Die Topf- bzw. Rakelzeit liegt bei etwa 20 Minuten.

Auf die ausgerakelte Schicht werden dann die auf 52 mm Länge geschnittenen Glas-Rovings gestreut und mit einer zweiten, ebenfalls auf Polyethylenfolie gerakelten PU-Schicht abgedeckt. Mittels geriffelter Andruckwalzen wird daraufhin für eine einwandfreie Durchtränkung der Glasfasern gesorgt. Nach Beendigung der bei Raumtemperatur ablaufenden Prepolymer-Reaktion kann die Polyethylenfolie von der Harzmatte abgezogen werden.

b) Herstellung eines Formkörpers

Um Formteile herzustellen, werden der jeweiligen Form entsprechende Teile aus der Matte herausgeschnitten und bei 120 °C und 75 bar verpreßt. Die Aushärtung erfolgt je nach Schichtstärke in 3 bis 10 Minuten. Das Fertigteil kann anschließend heiß entformt werden. Es ist auch möglich, mehrere Schichten übereinander in die Form einzulegen, da das Material beim Preßvorgang homogen ineinanderfließt. Auch bei längeren Fließwegen ist ein einwandfreier Transport der Glasfasern bis in die äußersten Ecken des Formteils gewährleistet.

Die Lagerstabilität der nach a) hergestellten Formpreßmasse beträgt bei Raumtemperatur mindestens 14 Tage. Durch Lagerung bei niedrigeren Temperaturen kann der Verarbeitungszeitraum noch verlängert werden.

An den wie unter b) beschrieben hergestellten ausgehärteten Prüfplatten wurden folgende Eigenschaften gemessen :

Prüfwerte ohne Glasfaser (Vergleich)

| | |
|---|---|
| Dichte nach DIN 53479 | 1,470 $g/cm^3$ |
| Härte Shore A/D nach DIN 53505 | 95/58 |
| Zugfestigkeit nach DIN 53504 | 11 MPa |
| Reißdehnung nach DIN 53504 | 144 % |
| Weiterreißfestigkeit nach DIN 53515 | 44 KN/m |
| Biegemodul nach ASTM D 790-71 | 196 MPa |
| Längenausdehnungskoeffizient nach VDE 0304/Teil 1 | $230 \cdot 10^{-6}$ $grd^{-1}$ |

Prüfwerte mit Glasfasern

| | |
|---|---|
| Dichte nach DIN 53479 | 1,550 $g/cm^3$ |
| Zugfestigkeit nach DIN 53504 | 47 MPa |
| Reißdehnung nach DIN 53504 | 5 % |
| Weiterreißfestigkeit nach DIN 53515 | 260 KN/m |
| Biegemodul nach ASTM D 790-71 | 1 840 MPa |
| Längenausdehnungskoeffizient nach VDE 0304/Teil 1 | $8 \cdot 10^{-6}$ $grd^{-1}$ |
| Kälteschlagzähigkeit bei – 30 °C nach DIN 53453 | 71 $KJ/m^2$ |

Beispiel 2

Komponente I

70 Teile eines verzweigten Polypropylenglykols mit endständig primären OH-Gruppen (Mol-Gew. : 6 000 ; Funktionalität = 3)

30 Teile eines verzweigten Polypropylenglykols (Mol-Gew. : 450 ; Funktionalität = 3).

10 Teile 1,4-Butandiol

5 Teile Na-Al-Silikat als 50 %ige Paste in einem teilweise verzweigten Polypropylenglykol (Mol-Gew. : 3 700 ; Funktionalität = 2,75).

2 Teile Polypropylenglykoladipat (Mol-Gew. : 820)

100 Teile Kalziumcarbonat (Kreide)

1 Teil Diethyl-toluylendiamin

1 Teil Bleisalz der Phenyl-ethyl-dithiocarbaminsäure.

Mittlere Funktionalität der gegenüber Isocyanaten reaktive Gruppen aufweisenden Verbindungen von Komponente I : 2,32.

Komponente II

35 Teile des technischen Diphenylmethandiisocyanat-Gemischs aus Beispiel 1
30 Teile dimeres 2,4-Toluylendiisocyanat

Komponente III

68 Teile der Glas-Rovings aus Beispiel 1.

Die Verarbeitung dieser Rezeptur erfolgt auf die gleiche Weise wie unter Beispiel 1 beschrieben. Die Verpressung führt zu härteren und damit auch biegesteiferen Produkten, was aus den Prüfwerten zu ersehen ist:

Prüfwerte ohne Glasfasern

| | |
|---|---|
| Dichte nach DIN 53479 | 1,440 $g/cm^3$ |
| Härte Shore A/D nach DIN 53505 | 97/63 |
| Zugfestigkeit nach DIN 53504 | 12,6 MPa |
| Reißdehnung nach DIN 53504 | 90 % |
| Weiterreißfestigkeit nach DIN 53515 | 67 KN/m |
| Biegemodul nach ASTM D 790-71 | 314 MPa |
| Längenausdehnungskoeffizient nach VDE 0304/Teil 1 | $210 \cdot 10^{-6}$ $grd^{-1}$ |

Prüfwerte mit Glasfasern

| | |
|---|---|
| Dichte nach DIN 53479 | 1,575 $g/cm^3$ |
| Zugfestigkeit nach DIN 53504 | 52 MPa |
| Reißdehnung nach DIN 53504 | 5 % |
| Weiterreißfestigkeit nach DIN 53515 | 280 KN/m |
| Biegemodul nach ASTM D 790-71 | 1 950 MPa |
| Längenausdehnungskoeffizient nach VDE 0304/Teil 1 | $8 \cdot 10^{-6}$ $grd^{-1}$ |
| Kälteschlagzähigkeit bei −30 °C nach DIN 53453 | 84 $KJ/m^2$ |

Beispiel 3

Zur Demonstration der Lagerstabilität bei 20 °C wird nach der Arbeitsweise von Beispiel 1 a) eine Formmasse aus der Rezeptur von Beispiel 2 hergestellt, aber ohne Mitverwendung der Glasfasern. Die Kontrolle des NCO-Gehaltes der Formmasse durch Titration mit 0,1 n Dibutylamin in Dimethylformamid zeigt, daß nach ca. 5 Tagen ein Wert von 3,2 % erreicht wird, der sich innerhalb der Untersuchungszeitraums von 7 Wochen nicht ändert. Aus der in der Rezeptur anwesenden Menge an dimerem Toluylendiisocyanat errechnet sich ein theoretischer Gehalt an NCO-Gruppen des hochschmelzenden Polyisocyanats von 3,4 %. Hieraus kann geschlossen werden, daß das in fester Phase vorliegende Polyisocyanat nicht wesentlich mit dem OH-Präpolymeren reagiert.

Beispiel 4 (Vergleich)

Zu der Polyolabmischung I) von Beispiel 1 werden als Isocyanatkomponente II)

22 Teile des technischen Diphenylmethandiisocyanat-Gemisches und
33 Teile dimeres 2,4-Toluylendiisocyanat

gegeben und auf die beschriebene Art mit 67 Teilen Glas-Rovings verarbeitet.

Bei dieser Rezeptur liegt ein NCO/OH-Äquivalentverhältnis von 0,4 vor gegenüber 0,7 in Beispiel 1. Nach Abschluß der Präpolymer-Reaktion war das Produkt sehr weich und ließ sich nicht von der Polyethylenfolie trennen.

Beim Verpressen findet kein einwandfreier Glastransport statt. Wegen des geringen Staudrucks treten Lufteinschlüsse und Lunkerstellen auf.

Beispiel 5 (Vergleich)

In die Polyolabmischung I) von Beispiel 2 werden als Isocyanatkomponente II)

44,6 Teile des technischen Diphenylmethandiisocyanat-Gemisches und

22 Teile dimeres 2,4-Toluylendiisocyanat
eingemischt und wie beschrieben darin
68 Teile Glas-Rovings eingearbeitet.

In diesem Fall liegt das NCO/OH-Äquivalentverhältnis bei 0,7 gegenüber 0,55 in Beispiel 2. Nach der Vorreaktion ist das Material so weit verfestigt, daß unter den angegebenen Preßbedingungen kein Fließen in der Form stattfindet.

**Ansprüche**

1. Im wesentlichen lösungsmittelfreie Formmassen, bestehend aus
A. 91 bis 25 Gew.-%, bezogen auf gesamte Formmasse, einer Polyhydroxylverbindung,
B. 4 bis 15 Gew.-%, bezogen auf gesamte Formmasse, eines Polyisocyanats mit einem Schmelzpunkt oberhalb von 100 °C und
C. 5 bis 60 Gew.-% eines organischen oder anorganischen Füllstoffs,
und gegebenenfalls üblichen Zusatzstoffen wobei das NCO/PH-Äquivalentverhältnis (unter Berücksichtigung evtl. verkappter NCO-Gruppen) der Komponenten A und B zwischen 1 : 1 und 1 : 1,75 liegt, dadurch gekennzeichnet, daß Komponente A ein Hydroxylgruppen aufweisendes Urethan-Präpolymeres mit einer Viskosität von mindestens 20 Pa.s/25 °C
0,5 bis 7 Gew.-%, bezogen auf Präpolymer, an freien Hydroxylgruppen,
5 bis 20 Gew.-%, bezogen auf Präpolymer, an Urethangruppen und gegebenenfalls
0 bis 2,5 Gew.-%, bezogen auf Präpolymer, an Harnstoffgruppen ist, das gegebenenfalls als Zusatz
1 bis 5 Gew.-%, bezogen auf präpolymer, eines Molekularsiebs vom Natriumaluminiumsilikattyp und
0,1 bis 5 Gew.-%, bezogen auf Präpolymer, eines oder mehrerer Aktivatoren,
enthält, und daß der als Komponente C) verwendete Füllstoff ein Fasermaterial mit einer mittleren Faserlänge von 10-100 mm ist.

2. Formmasse nach Anspruch 1, dadurch gekennzeichnet, daß Komponente A) 1,5 bis 4 Gew.-% an Hydroxylgruppen und 10 bis 15 Gew.-% an Urethangruppen aufweist.

3. Formmasse nach Ansprüchen 1 und 2, dadurch gekennzeichnet, daß Komponente B) ein Uretdiongruppen aufweisendes Diisocyanat ist.

4. Formmasse nach Anspruch 3, dadurch gekennzeichnet, daß Komponente B) dimeres Toluylendiisocyanat ist.

5. Formmasse nach Ansprüchen 1 bis 4, dadurch gekennzeichnet, daß Komponente C) ein Glasfasermaterial mit einer Länge von 20 bis 60 mm ist.

6. Verfahren zur Herstellung von faserverstärkten Formkörpern auf Polyurethanbasis durch stufenweise Umsetzung von Polyisocyanaten, höhermolekularen Polyhydroxylverbindungen und Kettenverlängerungsmitteln in Gegenwart eines faserförmigen Verstärkungsmaterials, dadurch gekennzeichnet, daß man
1. in einer ersten Stufe bei einer Temperatur von 10 bis 50 °C
a) ein Polyisocyanat mit
b) 80 bis 97 Gew.-%, bezogen auf die Summe der Komponenten b)-d), einer oder mehrerer, 2 bis 8 Hydroxylgruppen aufweisenden Verbindungen mit einem Molekulargewicht von 300 bis 10 000,
c) 3 bis 15 Gew.-% eines 2 bis 4 Hydroxylgruppen aufweisenden Kettenverlängerungsmittels mit einem Molekulargewicht von 62 bis 250, sowie gegebenenfalls
d) einer Verbindung mit 2 bis 4 Aminogruppen bzw. einer dazu äquivalenten Menge Wasser,
gegebenenfalls stufenweise, zu einem 0,5 bis 7 Gew.-% an Hydroxylgruppen, 5 bis 20 Gew.-% an Urethangruppen und 0 bis 2,5 Gew.-% Harnstoffgruppen aufweisenden Präpolymeren A) umsetzt wobei die Komponenten a) bis d) bei der gewählten Reaktionstemperatur flüssig sind und eine mittlere Funktionalität an gegenüber Isocyanaten reaktiven Gruppen von 2,0 bis 2,6 aufweisen und das Äquivalentverhältnis zwischen NCO-Gruppen der Komponente a) zu gegenüber NCO-Gruppen reaktiven Wasserstoffatomen der Komponenten b) bis d) zwischen 0,4 : 1 und 0,85 : 1 liegt, mit der Maßgabe, daß die mittlere Funktionalität der Komponenten b) bis d) mindestens 2,1 ist, falls das Äquivalentverhältnis unterhalb von 0,5 : 1 liegt, und maximal 2,4 ist, falls das Äquivalentverhältnis oberhalb von 0,65 : 1 liegt, dem Vorpolymeren A) während und/oder nach dessen Herstellung ein Polyisocyanat B) mit einem Schmelzpunkt oberhalb von 100 °C und ein Fasermaterial C) mit einer Faserlänge von 10 bis 100 mm sowie gebenenfalls 1 bis 5 Gew.-%, bezogen auf Präpolymer A), eines Molekularsiebs vom Natriumaluminiumsilikattyp und 0,1 bis 5 Gew.-%, bezogen auf Präpolymer A) eines oder mehrerer Aktivatoren zusetzt, und
2. in einem zweiten Schritt die so erhaltene Formmasse gemäß Anspruch 1) bei einer Temperatur oberhalb von 90 °C und einem Druck zwischen 20 und 400 bar unter Formgebung aushärtet.

7. Verfahren nach Anspruch 6, dadurch gekennzeichnet, daß als Komponente b) in der ersten Verfahrensstufe ein Gemisch aus
ba) 45 bis 90 Gew.-%, bezogen auf die Summe der Komponenten b) bis d), eines oder mehrerer Polyole mit einem Molekulargewicht von 1 000 bis 10 000 und

bb) 1 bis 45 Gew.-%, bezogen auf Summe der Komponenten b) bis d), eines oder mehrerer Polyole mit einem Molekulargewicht von 300 bis 950, wobei die Summe der Komponenten ba) und bb) 80-97 Gew.-% ergibt,

eingesetzt wird.

8. Verfahren nach Anspruch 7, dadurch gekennzeichnet, daß als Komponente b) ein Gemisch aus

ba) 50 bis 80 Gew.-%, bezogen auf die Summe der Komponenten b) bis d), eines oder mehrerer Polyole mit einem Molekulargewicht von 2 000 bis 8 000 und

bb) 5 bis 35 Gew.-% eines oder mehrerer Polyole mit einem Molekulargewicht von 350 bis 800

eingesetzt wird.

9. Verfahren nach Ansprüchen 6 bis 8, dadurch gekennzeichnet, daß im ersten Verfahrensschritt als Komponente b) ein Diamin mit einem Molekulargewicht unter 200 eingesetzt wird.

10. Verfahren nach Ansprüchen 6 bis 9, dadurch gekennzeichnet, daß im ersten Verfahrensschritt als Komponente B) ein pulverförmiges, Uretdiongruppen aufweisendes Diisocyanat mit einer Teilchengröße unter 40 μm eingesetzt wird.

**Claims**

1. Substantially solvent-free moulding compositions consisting of

A. from 91 to 25 % by weight, based on the moulding composition as a whole, of a polyhydroxyl compound,

B. from 4 to 15 % by weight, based on the moulding composition as a whole, of a polyisocyanate having a melting point above 100 °C and

C. from 5 to 60 % by weight of an organic or inorganic filler,

and, optionally, customary additives, the NCO/OH equivalent ratio (taking into account any masked NCO-groups) of components A and B amounting to between 1 : 1 and 1 : 1.75, characterised in that

component A) is a urethane prepolymer containing hydroxyl groups and having a viscosity of at least 20 Pa.s/25 °C which contains

from 0.5 to 7 % by weight, based on the prepolymer, of free hydroxyl groups,

from 5 to 20 % by weight, based on the prepolymer, of urethane groups, and, optionally,

from 0 to 2.5 % by weight, based on the prepolymer, of urea groups, and which optionally contains as additive

from 1 to 5 % by weight, based on the prepolymer, of a molecular sieve of the sodium aluminium silicate type and

from 0.1 to 5 % by weight, based on the prepolymer, of one or more activators,

and in that the filler used as component C) is a fibre material having an average fibre length of from 10 to 100 mm.

2. A moulding composition according to Claim 1, characterised in that component A) contains from 1,5 to 4 % by weight of hydroxyl groups and from 10 to 15 % by weight of urethane groups.

3. A moulding composition according to Claims 1 and 2, characterised in that component B) is a diisocyanate containing uretdione groups.

4. A moulding composition according to Claim 3, characterised in that component B) is dimeric tolylene diisocyanate.

5. A moulding composition according to Claims 1 to 4, characterised in that component C) is a glass fibre material having a length of from 20 to 60 mm.

6. A process for the production of fibre-reinforced polyurethane-based mouldings by reacting polyisocyanates, relatively high molecular weight polyhydroxyl compounds and chain-extending agents in stages in the presence of a fibrous reinforcing material, characterised in that,

1. in a first stage carried out at a temperature of from 10 to 50 °C,

a) a polyisocyanate is reacted with

b) from 80 to 97 % by weight, based on the sum of components b) to d), of one or more compounds containing from 2 to 8 hydroxyl groups and having a molecular weight of from 300 to 10,000,

c) from 3 to 15 % by weight of a chain-extending agent containing from 2 to 4 hydroxyl groups and having a molecular weight of from 62 to 250 and, optionally,

d) a compound containing from 2 to 4 amino groups or an equivalent quantity of water,

optionally in stages, to form a prepolymer A) containing from 0.5 to 7 % by weight of hydroxyl groups, from 5 to 20 % by weight of urethane groups and from 0 to 2.5 % by weight of urea groups, components a) to d) being liquid at the reaction temperature selected and having a mean functionality of isocyanate-reactive groups of from 2.0 to 2.6 and the equivalent ratio between NCO-groups of component a) and NCO-reactive hydrogen atoms of components b) to d) amounting to between 0.4 : 1 and 0.85 : 1, with the proviso that the mean functionality of components b) to d) is at least 2.1 if the equivalent ratio is below 0.5 : 1 and at most 2.4 if the equivalent ratio is above 0.65 : 1, a polyisocyanate B) having a melting point above 100 °C and a fibrous material C) having a fibre length of from 10 to 100 mm and, optionally, from 1 to 5 % by weight, based on prepolymer A), of a molecular sieve of the sodium aluminium silicate type and from 0.1 to 5 % by weight, based on prepolymer A), of one or more activators are added to the

prepolymer A) during and/or after its production, and

2. in a second stage, the moulding composition thus obtained according to Claim 1 is formed and at the same time hardened at a temperature above 90 °C and under a pressure between 20 and 400 bars.

7. A process according to Claim 6, characterised in that a mixture of

ba) from 45 to 90 % by weight, based on the sum of components b) to d), of one or more polyols having a molecular weight of from 1,000 to 10,000 and

bb) from 1 to 45 % by weight, based on the sum of components b) to d), of one or more polyols having a molecular weight of from 300 to 950,

the sum of components ba) and bb) being 80-97 % by weight, is used as component b) in the first stage of the process.

8. A process according to Claim 7, characterised in that a mixture of

ba) from 50 to 80 % by weight, based on the sum of components b) to d), of one or more polyols having a molecular weight of from 2,000 to 8,000 and

bb) from 5 to 35 % by weight of one or more polyols having a molecular weight of from 350 to 800 is used as component b).

9. A process according to Claims 6 to 8, characterised in that a diamine having a molecular weight below 200 is used as component b) in the first stage of the process.

10. A process according to Claims 6 to 9, characterised in that a powder-form diisocyanate containing uretdione groups and having a particle size of less than 40 µm is used as component B) in the first stage of the process.

**Revendications**

1. Matières à mouler sensiblement exemptes de solvant, consistant en

A. 91 à 25 % en poids, par rapport à la matière à mouler totale, d'un composé polyhydroxylé,

B. 4 à 15 % en poids par rapport à la matière à mouler totale, d'un polyisocyanate ayant un point de fusion supérieur à 100 °C et

C. 5 à 60 % en poids d'une charge organique ou inorganique,

et éventuellement des additifs habituels, le rapport d'équivalents NCO/OH (compte tenu des groupes NCO éventuellement bloqués) des composants A) et B) étant compris entre 1 : 1 et 1 : 1,75, caractérisées en ce que

le composant A) est un prépolymère d'uréthanne à groupes hydroxyle, d'une viscosité d'au moins 20 Pa.s. à 25 °C, renfermant

0,5 à 7 % en poids, par rapport au prépolymère, de groupes hydroxyle libres,

5 à 20 % en poids, par rapport au prépolymère, de groupes uréthanne et, éventuellement,

0 à 2,5 % en poids, par rapport au prépolymère, de groupes urée, qui contient éventuellement comme additif

1 à 5 % en poids, par rapport au prépolymère, d'un tamis moléculaire du type silicate de sodium et d'aluminium et

0,1 à 5 % en poids par rapport au polymère d'un ou plusieurs activeurs,

et en ce que la charge utilisée comme composant C) est une matière fibreuse ayant une longueur moyenne de fibres de 10-100 mm.

2. Matière à mouler selon la revendication 1, caractérisée en ce que le composant A) présente 1,5 à 4 % en poids de groupes hydroxyle et 10 à 15 % en poids de groupes uréthanne.

3. Matière à mouler selon les revendications 1 et 2, caractérisée en ce que le composant B) est un diisocyanate à groupes uretdione.

4. Matière à mouler selon la revendication 1, caractérisée en ce que le composant B) est le toluylènediisocyanate dimère.

5. Matière à mouler selon les revendications 1 à 4, caractérisée en ce que le composant C) est de la fibre de verre d'une longueur de 20 à 60 mm.

6. Procédé pour la préparation de pièces moulées à base de polyuréthannes renforcées par des fibres, par réaction par étapes de polyisocyanates, de composés polyhydroxylés de haut poids moléculaire et d'agents d'allongement de chaînes en présence d'une matière fibreuse de renforcement, qui est caractérisé en ce que

1. on fait réagir dans une première étape, éventuellement progressivement, à une température de 10 à 50 °C,

a) un polyisocyanate avec

b) 80 à 97 % en poids, par rapport à la somme des composants b)-d), d'un ou plusieurs composés d'un poids moléculaire de 300 à 10 000 présentant 2 à 8 groupes hydroxyle,

c) 3 à 15 % en poids d'un agent d'allongement de chaînes d'un poids moléculaire de 62 à 250, présentant 2 à 4 groupes hydroxyle, ainsi, éventuellement, que

d) un composé ayant 2 à 4 groupes amino ou une quantité d'eau équivalente,

en un prépolymère A) présentant 0,5 à 7 % en poids de groupes hydroxyle, 5 à 20 % en poids de groupes uréthanne et 0 à 2,5 % en poids de groupes urée, réaction dans laquelle les composants a)-d) sont liquides

à la température de réaction choisie et ont une fonctionnalité moyenne en groupes réactifs vis-à-vis de NCO de 2,0 à 2,6, et le rapport d'équivalents entre les groupes NCO du composant a) et les atomes d'hydrogène réactifs vis-à-vis des groupes NCO des composants b) à d) est compris entre 0,40 : 1 et 0,85 : 1, avec la condition que la fonctionnalité moyenne des composants b) à d) est d'au moins 2,1 dans le cas où le rapport d'équivalents et inférieur à 0,5 : 1 et au maximum 2,4 dans le cas où le rapport d'équivalents est de 0,65 : 1, on ajoute au prépolymère A) pendant et/ou après sa préparation un polyisocyanate B) d'un point de fusion de plus de 100 °C et une matière fibreuse C) d'une longueur moyenne de fibres de 10 à 100 mm, ainsi éventuellement que 1 à 5 % en poids, par rapport au prépolymère A), d'un tamis moléculaire du type silicate de sodium et d'aluminium, et 0,1 à 5 % en poids, par rapport au prépolymère A), d'un ou plusieurs activeurs et

2. on cuit dans une seconde étape la matière moulée selon la revendication 1 ainsi obtenue, à une température supérieure à 90 °C et sous une pression comprise entre 20 et 400 bars en la façonnant.

7. Procédé selon la revendication 6, caractérisé en ce que l'on utilise comme composant b) dans la première étape du procédé un mélange de

ba) 45 à 90 % en poids, par rapport à la somme des composants b) à d), d'un ou plusieurs polyols d'un poids moléculaire de 1 000 à 10 000 et

bb) 1 à 45 % en poids, par rapport à la somme des composants b) à d), d'un ou plusieurs polyols d'un poids moléculaire de 300 à 950,

la somme des composants ba) et bb) étant de 80-97 % en poids.

8. Procédé selon la revendication 7, caractérisé en ce que l'on utilise comme composant b) un mélange de

ba) 50 à 80 % en poids, par rapport à la somme des composants b) à d), d'un ou plusieurs polyols d'un poids moléculaire de 2 000 à 8 000 et

bb) 5 à 35 % en poids, d'un ou plusieurs polyols d'un poids moléculaire de 350 à 800.

9. Procédé selon les revendications 6 à 8, caractérisé en ce que l'on utilise comme composant b) dans la première étape du procédé une diamine ayant un poids moléculaire de moins de 200.

10. Procédé selon les revendications 6 à 9, caractérisé en ce que l'on utilise comme composant B) dans la première étape du procédé un diisocyanate à groupes uretdione pulvérulent, d'une dimension de particules inférieure à 40 μm.